# EUROPEAN PATENT SPECIFICATION

(11) **EP 3 622 823 B1**
(45) Date of publication and mention of the grant of the patent: **14.02.2024**
(21) Application number: 19166566.0
(22) Date of filing: 01.04.2019
(51) Int. Cl.: A21C 3/06, A21C 9/06, A21C 9/08, A21D 13/16

(54) **APPARATUS FOR THE PRODUCTION OF CROISSANTS OF THE SPANISH TYPE**
VORRICHTUNG ZUR HERSTELLUNG VON CROISSANTS NACH SPANISCHER ART
APPAREIL DE PRODUCTION DE CROISSANTS DU TYPE ESPAGNOL

(30) Priority: 14.09.2018 IT 201800008604
(43) Date of publication of application: 18.03.2020
(73) Proprietor: RONDO SCHIO S.R.L., 36015 SCHIO (VI) (IT)
(72) Inventor: SCALZERI, Andrea, 36010 ROANA, Frazione CAMPOROVERE VI (IT)
(74) Representative: Modiano, Micaela Nadia

(56) References cited:
- EP-A1- 0 372 879
- EP-A1- 0 663 150
- EP-A2- 1 256 279
- EP-A2- 1 285 581
- EP-A2- 2 213 176
- EP-B1- 0 372 879
- EP-B1- 0 663 150
- EP-B1- 1 256 279
- ES-A2- 2 066 644
- ES-B1- 2 066 644
- GB-A- 2 276 845
- NL-C2- 1 021 016

## Description

The present invention relates to an apparatus for the production of croissants of the Spanish type.

So-called Spanish croissants differ from classic croissants, such as for example French or Belgian croissants.

The main difference is constituted by the fact that they have longer ends (horns), as well as a greater number of turns wrapped in the central part.

For this reason, these croissants are generally handmade.

Specifically, the handmade production method entails cutting from a strip of dough in sheet form dough triangles, which are stretched manually while holding the base of the triangle stationary.

At this point, the two base corners of the triangle are gripped and pulled laterally so as to provide a sheet of dough that is very long but particularly wide at the base.

In order to provide the croissant, the triangular band of dough is rolled up starting from the base.

Some apparatuses have been proposed in order to try to replicate the operations described above.

In particular, GB2276845 describes a method that provides for an incision at the center of the base of the dough triangle and then a longitudinal traction of the dough triangle over its entire surface, by using a calibration roller, along a stretching direction that is substantially at right angles to the base.

Subsequently, the sheet of dough is pulled laterally by gripping, by virtue of grip means, the base at the two corner ends in a mutually spacing movement.

This method has the drawback of deforming excessively the sheet of dough, which is first pulled longitudinally along its entire surface and then along its width.

This deformation damages the gluten structure and therefore worsens the baking.

A method is also known, from NL 1021016, for producing a Spanish croissant starting from a triangular sheet of dough which entails the following steps:
- pulling a triangular sheet of dough apart from a transverse strip at the base;
- providing an incision substantially at the center of the base strip that is not pulled;
- pulling the base strip laterally from the incision in the direction of the corner points arranged at the ends of the base strip;
- rolling up the base strip, divided and extended in the advancement direction of the triangular sheet of dough.

Even this constructive solution is not free from drawbacks.

First of all, above all a certain difficulty is noted in keeping the sheet of dough correctly aligned both during longitudinal traction and during lateral traction.
EP1285581 and ES2066644 disclose examples of apparatuses for the production of croissants according to the preamble of claim 1.

The aim of the present invention is to provide an apparatus for producing croissants of the Spanish type that is capable of improving the background art in one or more of the above mentioned aspects.

Within this aim, an object of the invention is to provide an apparatus for the production of croissants of the Spanish type that allows to manage in an extremely reliable manner the deformation of the dough triangles both in a longitudinal direction and in a lateral direction.

Another object of the invention is to provide an apparatus for the production of croissants of the Spanish type that ensures a correct alignment of the triangles during the lateral traction step.

Another object of the invention is to provide an apparatus for the production of croissants of the Spanish type that is highly reliable, relatively easy to provide and at competitive costs.

This aim as well as these and other objects that will become better apparent hereinafter are achieved by an apparatus for the production of croissants of the Spanish type according to claim 1, optionally provided with one or more of the characteristics of the dependent claims.

Further characteristics and advantages of the invention will become better apparent from the description of some preferred but not exclusive embodiments of the apparatus for the production of croissants of the Spanish type according to the invention, illustrated by way of non-limiting example in the accompanying drawings, wherein:
Figure 1 is a lateral elevation view of a first embodiment of a portion of the apparatus according to the invention, in which the dough triangle is engaged with the retention means;
Figure 2 is a top plan view of the first embodiment of a portion of the apparatus according to the invention, in which the dough triangle is engaged with the retention means;
Figure 3 is a lateral elevation view of the first embodiment of a portion of the apparatus according to the invention, in which the dough triangle is engaged with the retention means and with the longitudinal elongation means;
Figure 4 is a top plan view of the first embodiment of a portion of the apparatus according to the invention, in which the dough triangle is engaged with the retention means and with the longitudinal elongation means;
Figure 5 is a lateral elevation view of the first embodiment of a portion of the apparatus according to the invention, in which the dough triangle is engaged with the terminal part of the retention means and with the longitudinal elongation means;
Figure 6 is a top plan view of the first embodiment of a portion of the apparatus according to the invention, in which the dough triangle is engaged with the terminal part of the retention means and with the longitudinal elongation means;
Figure 7 is a lateral elevation view of the first embodiment of a portion of the apparatus according to the invention, in which the dough triangle is engaged with the longitudinal elongation means and with a vertically movable cutting disk which performs a cut, of variable length that can be defined by the operator, in the center of the base of the triangle;
Figure 8 is a top plan view of the first embodiment of a portion of the apparatus according to the invention, in which the dough triangle is engaged with the longitudinal elongation means and with a vertically movable cutting disk which performs a cut, of variable length that can be defined by the operator, in the center of the base of the triangle;
Figure 9 is a lateral elevation view of the first embodiment of a portion of the apparatus according to the invention, in which the dough triangle is engaged with the divaricator means in the grip position;
Figure 10 is a top plan view of the first embodiment of a portion of the apparatus according to the invention, in which the dough triangle is engaged with the divaricator means in the grip position;
Figure 11 is a lateral elevation view of the first embodiment of a portion of the apparatus according to the invention, in which the dough triangle is engaged with the divaricator means in the widening end position;
Figure 12 is a top plan view of the first embodiment of a portion of the apparatus according to the invention, in which the dough triangle is engaged with the divaricator means in the widening end position;
Figure 13 is a lateral elevation view of the second embodiment of a portion of the apparatus according to the invention, in which the dough triangle is engaged with the retention means;
Figure 14 is a top plan view of the second embodiment of a portion of the apparatus according to the invention, in which the dough triangle is engaged with the retention means;
Figure 15 is a lateral elevation view of the second embodiment of a portion of the apparatus according to the invention, in which the dough triangle is engaged with the retention means and with the longitudinal elongation means;
Figure 16 is a top plan view of the second embodiment of a portion of the apparatus according to the invention, in which the dough triangle is engaged with the retention means and with the longitudinal elongation means;
Figure 17 is a lateral elevation view of the second embodiment of a portion of the apparatus according to the invention, in which the dough triangle is engaged with the terminal part of the retention means and with the longitudinal elongation means;
Figure 18 is a top plan view of the second embodiment of a portion of the apparatus according to the invention, in which the dough triangle is engaged with the terminal part of the retention means and with the longitudinal elongation means;
Figure 19 is a lateral elevation view of the second embodiment of a portion of the apparatus according to the invention, in which the dough triangle is engaged with the longitudinal elongation means, which also provide the divarication step, and with a vertically movable cutting disk, which performs a cut, of variable length that can be defined by the operator, in the center of the base of the triangle;
Figure 20 is a top plan view of the second embodiment of a portion of the apparatus according to the invention, in which the dough triangle is engaged with the longitudinal elongation means, which also provide the divarication step, and with a vertically movable cutting disk, which performs a cut, of variable length that can be defined by the operator, in the center of the base of the triangle;
Figure 21 is a lateral elevation view of the second embodiment of a portion of the apparatus according to the invention, in which the dough triangle is engaged with the divaricator means;
Figure 22 is a top plan view of the second embodiment of a portion of the apparatus according to the invention, in which the dough triangle is engaged with the divaricator means;
Figure 23 is a lateral elevation view of the second embodiment of a portion of the apparatus according to the invention, in which the dough triangle is elongated and divaricated;
Figure 24 is a top plan view of the second embodiment of a portion of the apparatus according to the invention, in which the dough triangle is elongated and divaricated.

With reference to the above cited figures, the apparatus for the production of croissants of the Spanish type according to the invention, generally designated by the reference numeral 1, comprises means 2 for conveying dough triangles 10 along an advancement direction 100.

The conveyor means 2 comprise, in particular, at least one first conveyor belt 3 and at least one second conveyor belt 4 for the dough triangles 10.

The first and second conveyor belts 3, 4 are arranged in mutual succession along the advancement direction 100.

The dough triangles 10 are arranged on the conveyor means 2 so that their base 10a is oriented forward and substantially at right angles to the advancement direction 100.

The second conveyor belt 4 has a second advancement speed (v2) which is greater than a first advancement speed (v1) of the first conveyor belt 3.

According to the present invention, means 20 for retaining the dough triangles 10 are associated with the first conveyor belt 3 and are arranged above the dough triangles 10.

Moreover, the apparatus 1 comprises deformation means 30 which have longitudinal elongation means 31 associated with the second conveyor belt 4 and arranged above the dough triangles 10.

According to the invention, the retention means 20 and the longitudinal elongation means 31 act in a "central/middle" region proximate to the axis of symmetry of the dough triangles 10.

In this manner, i.e., by acting only in the central region, a reduction of the thickness of the regions proximate to the sides of the dough triangles 10 is not produced, preserving their thickness.

The divarication of the base creates a reduction of the thickness proximate to the front side but not in the regions proximate to the inclined sides.

In particular, the longitudinal elongation means 31 can be engaged with a portion of a respective dough triangle 10 when the retention means 20 are still engaged with a portion of the corresponding dough triangle 10.

Conveniently, the deformation means 30 comprise means 40 for divaricating the base 10a of the dough triangles 10.

The divaricator means 40 are arranged, in particular, downstream of the longitudinal elongation means 31.

Nothing prevents positioning the divaricator means 40 upstream of the longitudinal elongation means 30.

Preferably, the retention means 20 have a longitudinal extension that is parallel to the advancement direction 100.

Specifically, the retention means 20 can move at a speed that is substantially equal to the advancement speed (v1) of the first conveyor belt 3.

As shown in the figures, the retention means 20 comprise at least one presser belt 21 wound around at least two guiding pulleys in order to define a lower section 21a that faces the first conveyor belt 3.

The lower section 21a of the presser belt 20 has an extension that is substantially parallel to the advancement direction 100 and engages a middle portion of the dough triangles 10.

Conveniently, means for adjusting the position of the lower section 21a of the presser belt 21 with respect to the first conveyor belt 3 may be provided.

These adjustment means are adapted to adjust the distance of at least one portion of the lower section 21a with respect to the first conveyor belt 3.

When the dough triangles 10 are engaged with the retention means 20, a portion thereof, and conveniently the longitudinal portion arranged at the middle of the base 10b, is clamped between the first conveyor belt 2 arranged below and the retention means 20 arranged above.

The retention means 20 have at least one elongated element which approaches the first conveyor belt 3 along the advancement direction 100 toward the second conveyor belt 4.

This facilitates the engagement of the dough triangle 10 with the retention means 20 and the precise keeping of the movement trajectory parallel to the advancement direction 100.

The longitudinal elongation means 31 are arranged above the dough triangles 10 and they too can move parallel to the advancement direction 100.

The speed of the longitudinal elongation means 31 is substantially equal to the second speed (v2) of the second conveyor belt 4.

The apparatus 1 has, downstream of the longitudinal elongation means 31, a device, not shown, for rolling up the dough triangles 10.

It is also possible to provide, between the longitudinal elongation means 31 and the rolling up device, a filling station.

The apparatus 1 comprises, if the divaricator means 40 are provided, a device for scoring the base 10a of the dough triangles 10 in order to provide at least one incision 10b which is substantially perpendicular to the base 10a of the dough triangle 10.

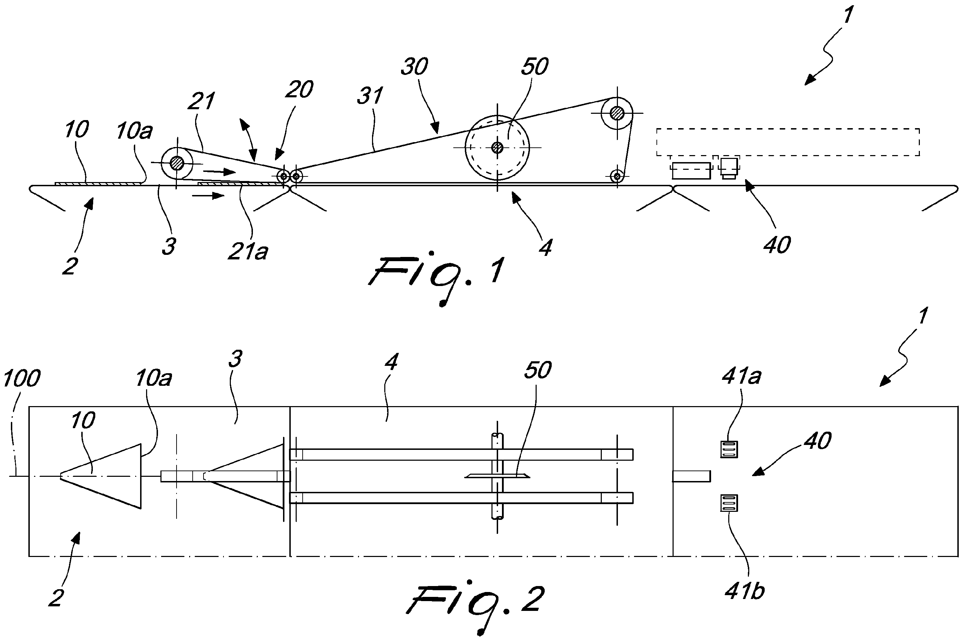

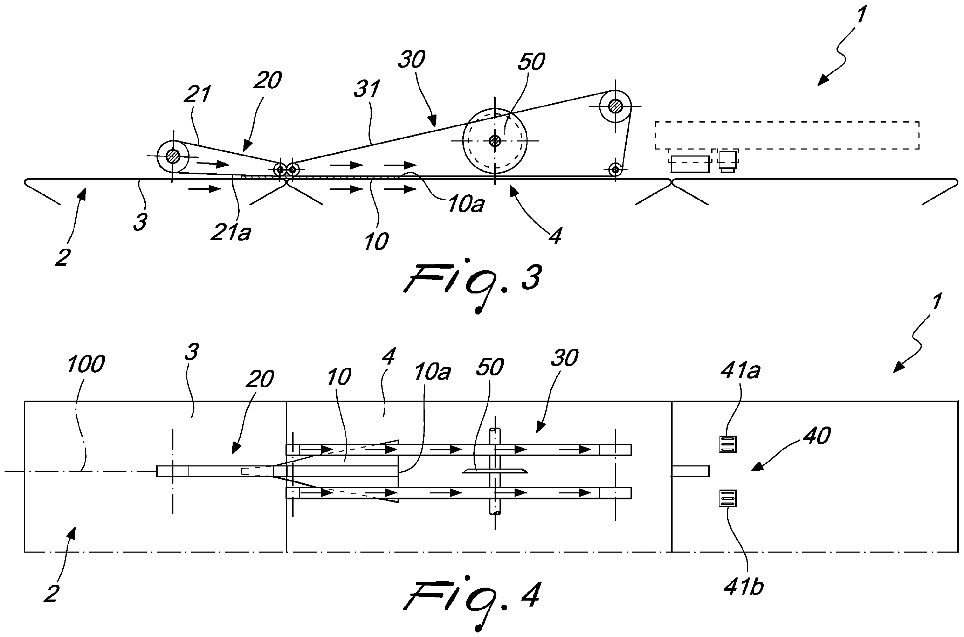

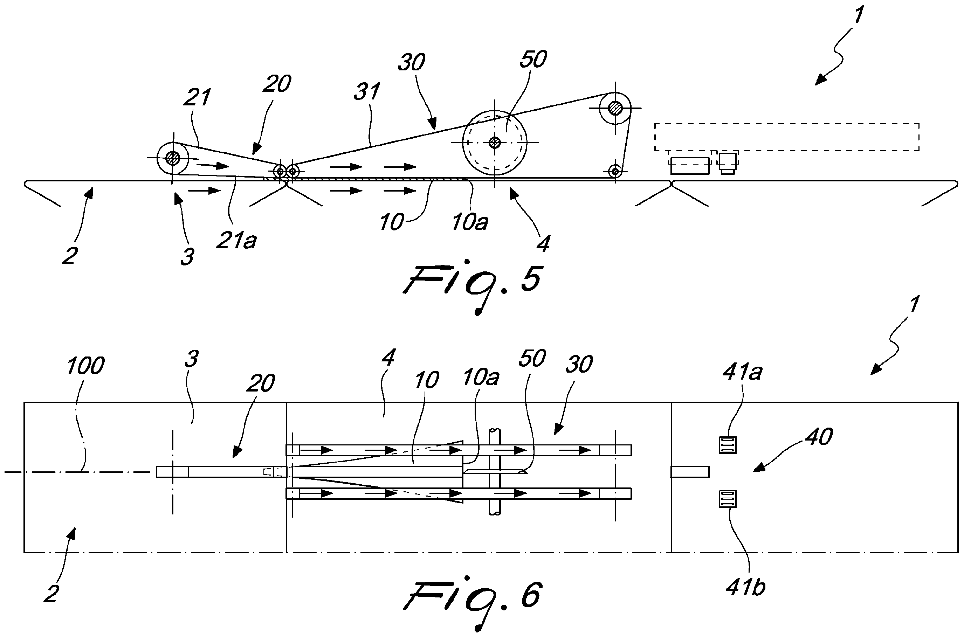

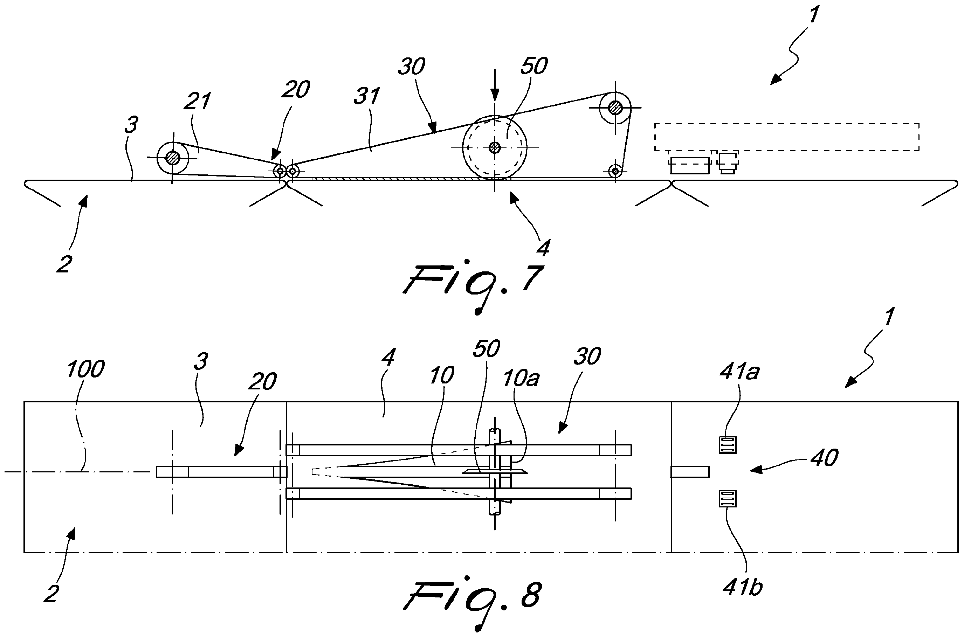

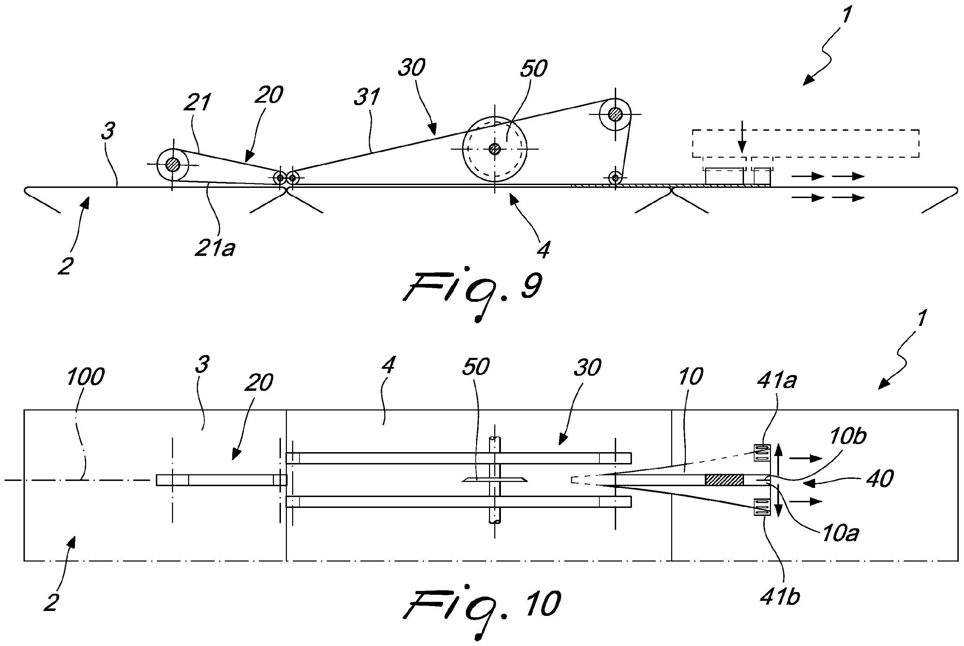

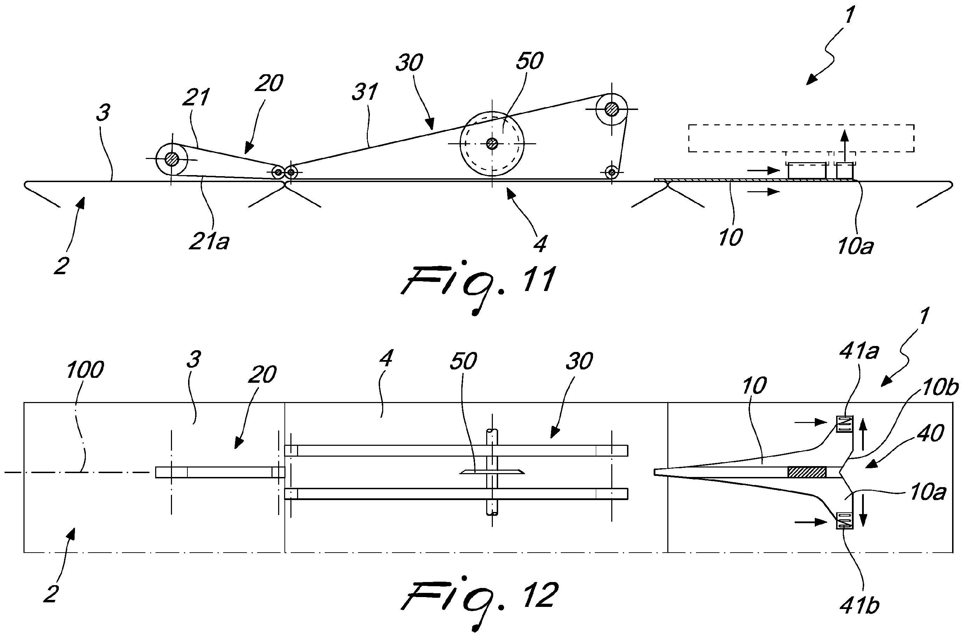

With reference to the first practical embodiment shown in Figures 1 to 12, the divaricator means 40 comprise at least one first divaricator roller and at least one second divaricator roller (41a, 41b), which can move, when it is engaged with the base 10a of the dough triangle 10, away from the axis of symmetry.

Preferably, between the deformation means 30 and the divaricator means 40 there is a vertically movable cutting disk 50, which performs a cut 10c, of a length that is variable and can be defined by the operator, in the center of the base 10a of the dough triangle 10.

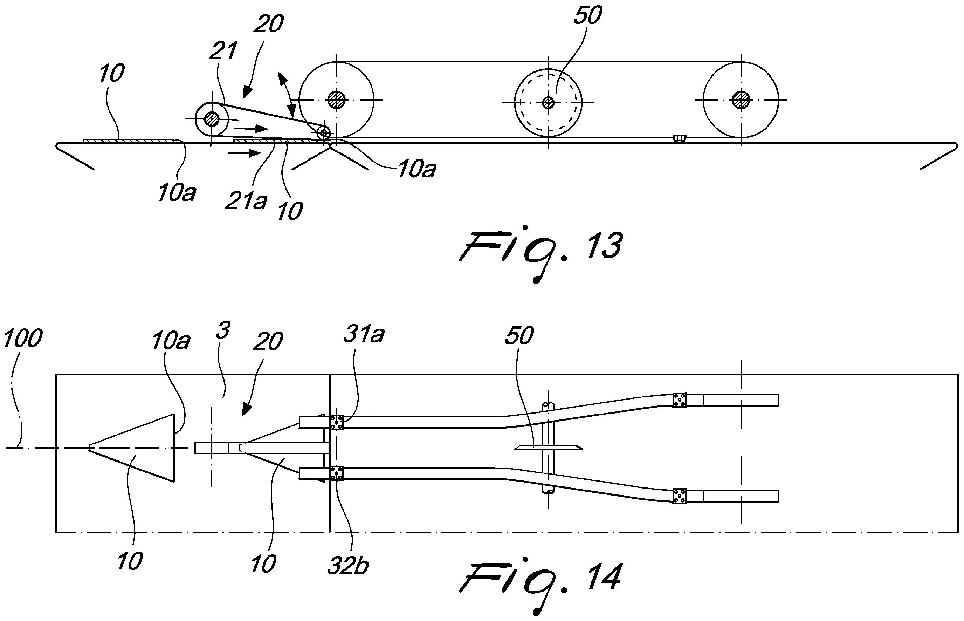

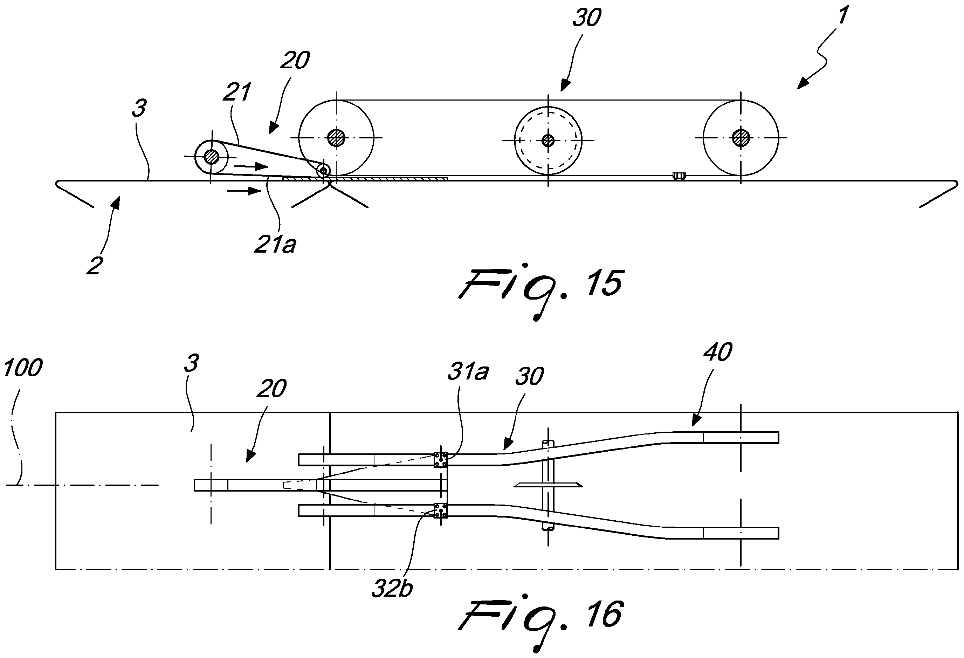

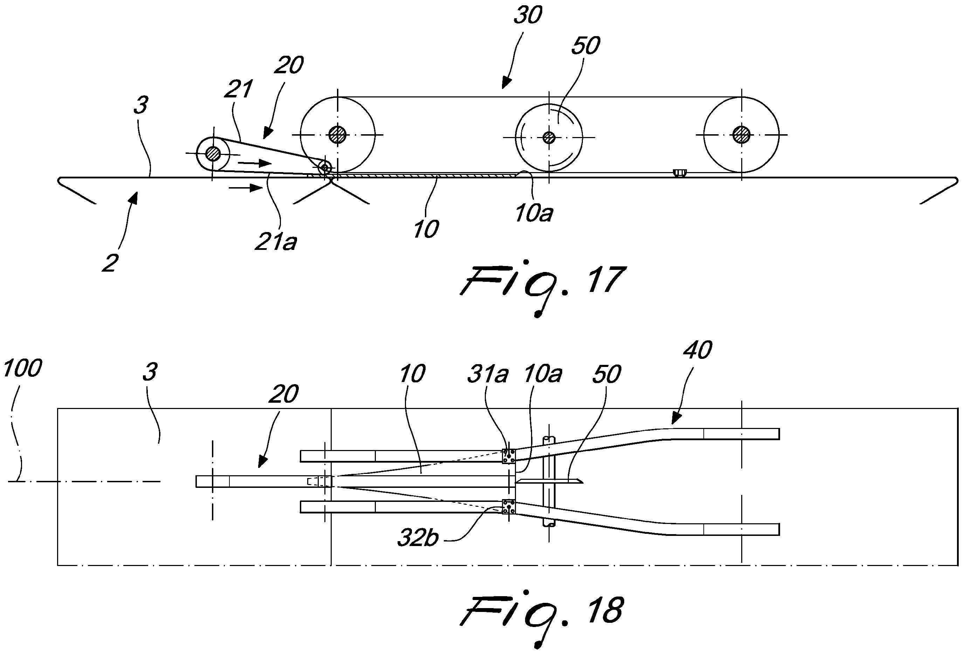

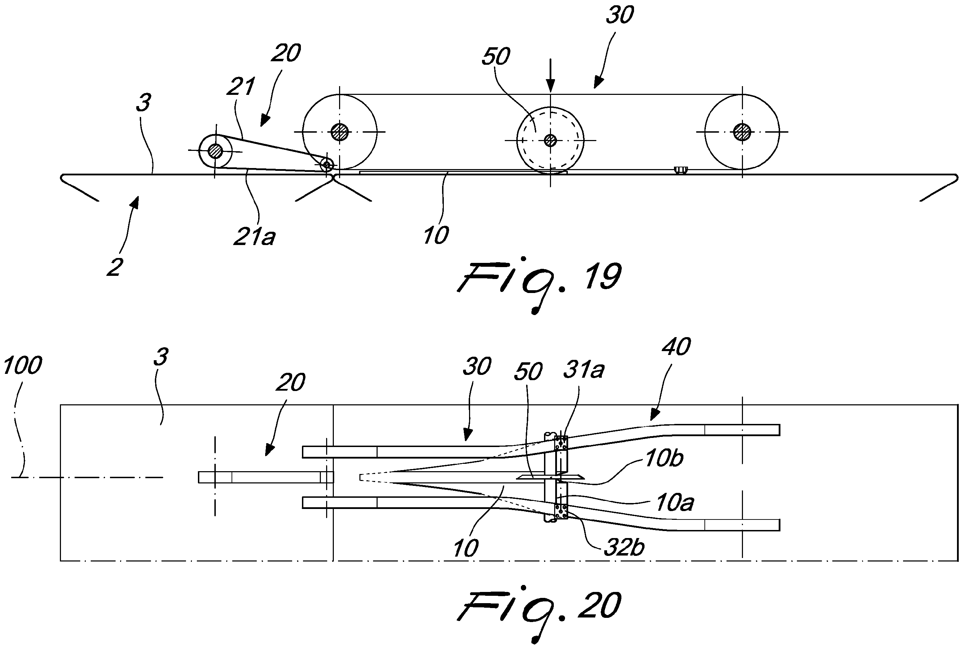

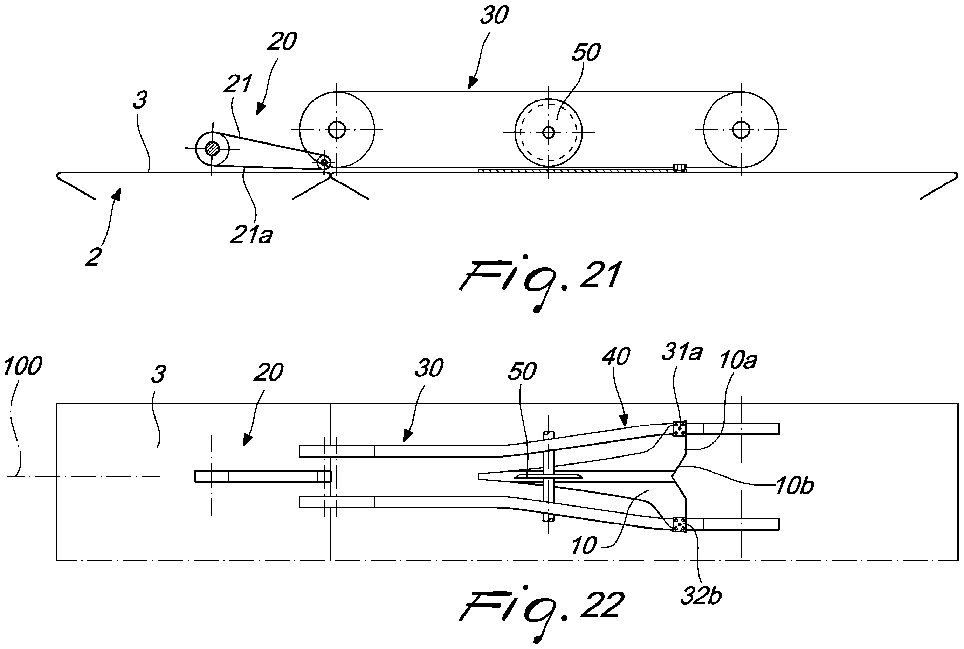

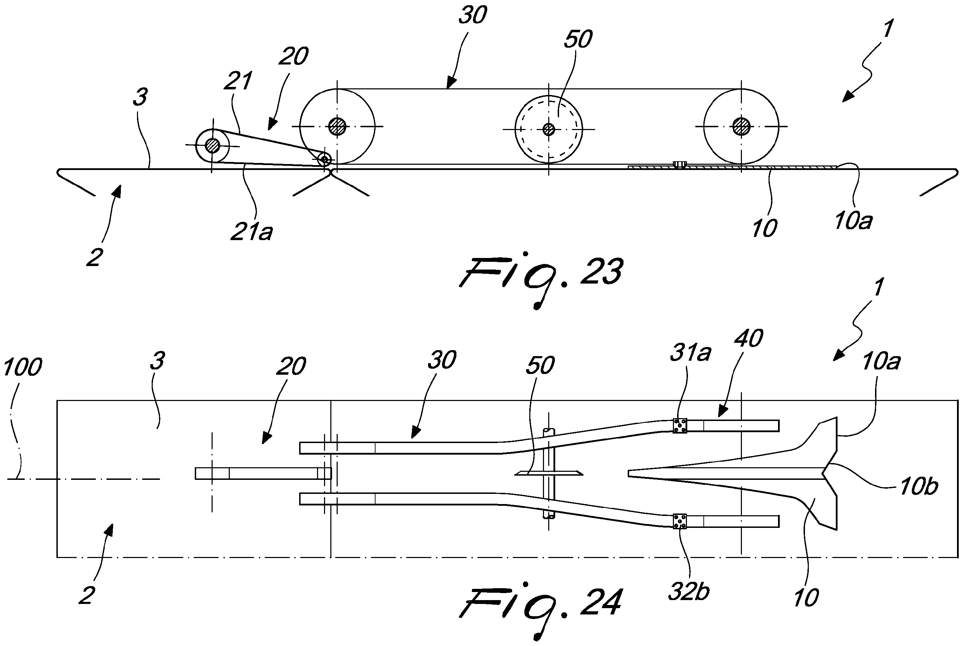

With reference instead to the second embodiment shown in Figures 13 to 24, the divaricator means 40 comprise at least one first handling tool and at least one second handling tool 32a, 32b, which can move, when engaged with the base 10a of the dough triangle 10, away from the at least one incision 10b.

In a first step, the first and second handling tools 32a, 32b move exclusively parallel to the advancement direction 100 in order to provide the elongation in a longitudinal direction of the dough triangle 10 (Figures 13 to 18), while in a second step they have, in addition to the movement parallel to the advancement direction, a movement component which is at right angles to the advancement direction in order to provide a divarication of the tips of the dough triangle 10.

The operation of the apparatus according to the invention is as follows.

The dough triangles 10 are fed to the first conveyor belt 3 so that they are oriented with their base 10a arranged forward and at right angles to the advancement direction 100 of the first conveyor belt.

Optionally, before the dough triangles 10 reach the retention means 20, a scoring device provides an incision 10b at the middle of the base 10a.

This operation, however, can be performed even after the step for elongation in a longitudinal direction of the dough triangle 10.

Before the dough triangles 10 move from the first conveyor belt 3 onto the second conveyor belt 4, the retention means 20 engage the upper surface of the dough triangles, applying to them a pressure that is substantially at right angles to the plane of arrangement of the first conveyor belt 3 and gradually increases toward the second conveyor belt 4.

When the base 10a of the dough triangle 10 arrives at the second conveyor belt 4, the surface of its base 10a that faces upward engages with the longitudinal elongation means 31 when the portion arranged upstream at the first conveyor belt 3 is still engaged with the retention means 20.

In fact, it is found that the effect of stretching in a longitudinal direction is determined by the action of the retention means 20 and of the longitudinal elongation means 31 thanks to the difference in speed in a longitudinal direction.

In practice it has been found that the invention achieves the intended aim and objects, providing an apparatus capable of replicating the characteristics of croissants of the Spanish type.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for the production of croissants of the Spanish type, comprising means (2) for conveying dough triangles (10) along an advancement direction (100), said conveyor means (2) comprising at least one first conveyor belt (3) and at least one second conveyor belt (4) of said dough triangles (10), said first and second conveyor belts (3, 4) being arranged in mutual succession along said advancement direction (100), said dough triangles (10) being configured to be arranged on said conveyor means (2) so that their base (10a) is oriented forward and at right angles to said advancement direction (100), said second conveyor belt (4) having a second advancement speed (v2) which is greater than a first advancement speed (v1) of said first conveyor belt (3), retention means (20) for retaining said dough triangles (10) being associated with said first conveyor belt (3) and being configured to be arranged above said dough triangles (10), deformation means (30) being provided which have longitudinal elongation means (31) associated with said second conveyor belt (4) and configured to be arranged above said dough triangles (10), said longitudinal elongation means (31) being configured to be engaged with a portion of a respective dough triangle (10) when said retention means (20) again engage a portion of the corresponding dough triangle (10), a device for rolling up said dough triangles (10) being arranged downstream of said deformation means (30), **characterized in that** said retention means (20) and said longitudinal elongation means (31) are configured to act in a central/middle region proximate to the axis of symmetry of the dough triangles (10).

2. The apparatus (1) according to claim 1, **characterized in that** said deformation means (30) comprise means (40) for divaricating the base (10a) of said dough triangles (10).

3. The apparatus (1) according to one or more of the preceding claims, **characterized in that** said divaricator means (40) are arranged downstream or upstream of said longitudinal elongation means (30).

4. The apparatus (1) according to one or more of the preceding claims, **characterized in that** said retention means (20) have a longitudinal extension that is parallel to said advancement direction (100).

5. The apparatus (1) according to one or more of the preceding claims, **characterized in that** said retention means (20) can move at a speed that is equal to the first advancement speed (v1) of said first conveyor belt (3).

6. The apparatus (1) according to one or more of the preceding claims, **characterized in that** said retention means (20) have at least one elongated element which approaches said first conveyor belt (3) along said advancement direction (100) toward said second conveyor belt (4).

7. The apparatus (1) according to one or more of the preceding claims, **characterized in that** said longitudinal elongation means (30) can move parallel to said advancement direction (100) at a speed that is equal to said second advancement speed (v2) of said second conveyor belt (4).

8. The apparatus (1) according to one or more of the preceding claims, **characterized in that** it comprises, upstream of said divaricator means (40), a device (50) for scoring said base (10a) of said dough triangles (10) in order to provide at least one incision (10b) which is perpendicular to said base (10a) of said dough triangle (10).

9. The apparatus (1) according to one or more of the preceding times, **characterized in that** said retention means (20) comprise at least one presser belt (21).

10. The apparatus (1) according to one or more of the preceding claims, **characterized in that** said divaricator means (40) comprise at least one first and at least one second divaricator roller (41a, 41b), which can move in engagement with said base (10a) of said dough triangle (10) away from said at least one incision (10b).

11. The apparatus (1) according to one or more of the preceding claims, **characterized in that** said divaricator means (40) comprise at least one first and at least one second divarication handling tool (42a, 42b) which can move, in engagement with said base (10a) of said dough triangle (10), away from said at least one incision (10b).

## Patentansprüche

1. Eine Vorrichtung (1) zur Herstellung von Croissants nach spanischer Art, die Mittel (2) zum Fördern von Teig-Dreiecken (10) entlang einer Vorschubrichtung (100) umfasst; wobei die Beförderungsmittel (2) mindestens ein erstes Förderband (3) und mindestens ein zweites Förderband (4) für die Teig-Dreiecke (10) umfassen, wobei das erste und das zweite Förderband (3, 4) in Folge entlang der Vorschubrichtung (100) angeordnet sind; wobei die Teig-Dreiecke (10) ausgebildet sind, um auf den Beförderungsmitteln (2) so angeordnet zu werden, dass ihre Basis (10a) vorwärts und in rechten Winkeln zu der Vorschubrichtung (100) ausgerichtet ist; wobei das zweite Förderband (4) eine zweite Vorschubgeschwindigkeit (v2) hat, die höher ist als eine erste Vorschubgeschwindigkeit (v1) des ersten Förderbandes (3); wobei Haltemittel (20) zum Halten der Teig-Dreiecke (10) mit dem ersten Förderband (3) verbunden und ausgebildet sind, um über den Teig-Dreiecken (10) angeordnet zu werden; wobei Verformungsmittel (30) bereitgestellt sind, die längliche Verlängerungsmittel (31) haben, welche mit dem zweiten Förderband (4) verbunden und ausgebildet sind, um über den Teig-Dreiecken (10) angeordnet zu werden, wobei die länglichen Verlängerungsmittel (31) ausgebildet sind, um mit einem Abschnitt eines entsprechenden Teig-Dreiecks (10) in Eingriff gebracht zu werden, wenn die Haltemittel (20) erneut in einen Abschnitt des entsprechenden Teig-Dreiecks (10) eingreifen; wobei eine Vorrichtung zum Aufrollen der Teig-Dreiecke (10) stromabwärts von den Verformungsmitteln (30) angeordnet ist; **dadurch gekennzeichnet, dass** die Haltemittel (20) und die länglichen Verlängerungsmittel (31) ausgebildet sind, um in einem zentralen/mittleren Bereich in der Nähe der Symmetrieachse der Teig-Dreiecke (10) zu arbeiten.

2. Die Vorrichtung (1) gemäß Anspruch 1, **dadurch gekennzeichnet, dass** die Verformungsmittel (30) Mittel (40) zum Verzweigen der Basis (10a) der Teig-Dreiecke (10) umfassen.

3. Die Vorrichtung (1) gemäß einem oder mehreren der obigen Ansprüche, **dadurch gekennzeichnet, dass** die Verzweigermittel (40) stromabwärts oder stromaufwärts von den länglichen Verlängerungsmitteln (30) angeordnet sind.

4. Die Vorrichtung (1) gemäß einem oder mehreren der obigen Ansprüche, **dadurch gekennzeichnet, dass** die Haltemittel (20) eine Längsausdehnung haben, die parallel zu der Vorschubrichtung (100) ist.

5. Die Vorrichtung (1) gemäß einem oder mehreren der obigen Ansprüche, **dadurch gekennzeichnet, dass** die Haltemittel (20) sich mit einer Geschwindigkeit bewegen können, die gleich der ersten Vorschubgeschwindigkeit (v1) des ersten Förderbandes (3) ist.

6. Die Vorrichtung (1) gemäß einem oder mehreren der obigen Ansprüche, **dadurch gekennzeichnet, dass** die Haltemittel (20) mindestens ein verlängertes Element haben, das sich dem ersten Förderband (3) entlang der Vorschubrichtung (100) zu dem zweiten Förderband (4) hin nähert.

7. Die Vorrichtung (1) gemäß einem oder mehreren der obigen Ansprüche, **dadurch gekennzeichnet, dass** die länglichen Verlängerungsmittel (30) sich parallel zu der Vorschubrichtung (100) mit einer Geschwindigkeit bewegen können, die gleich der zweiten Vorschubgeschwindigkeit (v2) des zweiten Förderbandes (4) ist.

8. Die Vorrichtung (1) gemäß einem oder mehreren der obigen Ansprüche, **dadurch gekennzeichnet, dass** sie stromaufwärts von den Verzweigermitteln (40) eine Vorrichtung (50) zum Einkerben der Basis (10a) der Teig-Dreiecke (10) umfasst, um mindestens einen Einschnitt (10b) durchzuführen, der senkrecht zu der Basis (10a) des Teig-Dreiecks (10) ist.

9. Die Vorrichtung (1) gemäß einem oder mehreren der obigen Zeiten, **dadurch gekennzeichnet, dass** die Haltemittel (20) mindestens ein Pressband (21) umfassen.

10. Die Vorrichtung (1) gemäß einem oder mehreren der obigen Ansprüche, **dadurch gekennzeichnet, dass** die Verzweigermittel (40) mindestens eine erste und mindestens eine zweite Verzweigerrolle (41a, 41b) umfassen, die sich in Eingriff mit der Basis (10a) des Teig-Dreiecks (10) von dem mindestens einen Einschnitt (10b) fort bewegen kann.

11. Die Vorrichtung (1) gemäß einem oder mehreren der obigen Ansprüche, **dadurch gekennzeichnet, dass** die Verzweigermittel (40) mindestens ein erstes und mindestens ein zweiten Verzweigungs-Handhabungswerkzeug (42a, 42b) umfassen, welches sich, in Eingriff mit der Basis (10a) des Teig-Dreiecks (10), von dem mindestens einen Einschnitt (10b) fort bewegen kann.

## Revendications

1. Appareil (1) pour la production de croissants du type espagnol, comprenant des moyens (2) pour transporter des triangles de pâte (10) le long d'une direction d'avancement (100), lesdits moyens de transport (2) comprenant au moins une première courroie transporteuse (3) et au moins une seconde courroie transporteuse (4) desdits triangles de pâte (10), lesdites première et seconde courroies transporteuses (3, 4) étant agencées en succession mutuelle le long de ladite direction d'avancement (100), lesdits triangles de pâte (10) étant configurés pour être agencés sur lesdits moyens de transport (2) de sorte que leur base (10a) est orientée vers l'avant et en angle droit par rapport à ladite direction d'avancement (100), ladite seconde courroie transporteuse (4) ayant une seconde vitesse d'avancement (v2) qui est supérieure à une première vitesse d'avancement (v1) de ladite première courroie transporteuse (3), des moyens de retenue (20) pour retenir lesdits triangles de pâte (10) étant associés à ladite première courroie transporteuse (3) et étant configurés pour être agencés au-dessus desdits triangles de pâte (10), des moyens de déformation (30) étant prévus qui ont des moyens d'allongement longitudinal (31) associés à ladite seconde courroie transporteuse (4) et configurés pour être agencés au-dessus desdits triangles de pâte (10), lesdits moyens d'allongement longitudinal (31) étant configurés pour être mis en prise avec une partie d'un triangle de pâte (10) respectif lorsque lesdits moyens de retenue (20) mettent à nouveau en prise une partie du triangle de pâte (10) correspondant, un dispositif pour enrouler lesdits triangles de pâte (10) étant agencé en aval desdits moyens de déformation (30), **caractérisé en ce que** lesdits moyens de retenue (20) et lesdits moyens d'allongement longitudinal (31) sont configurés pour agir dans une région centrale/médiane à proximité de l'axe de symétrie des triangles de pâte (10).

2. Appareil (1) selon la revendication 1, **caractérisé en ce que** lesdits moyens de déformation (30) comprennent des moyens (40) pour écarter la base (10a) desdits triangles de pâte (10).

3. Appareil (1) selon une ou plusieurs des revendications précédentes, **caractérisé en ce que** lesdits moyens d'écartement (40) sont agencés en aval ou en amont desdits moyens d'allongement longitudinal (30).

4. Appareil (1) selon une ou plusieurs des revendications précédentes, **caractérisé en ce que** lesdits moyens de retenue (20) ont une extension longitudinale qui est parallèle à ladite direction d'avancement (100).

5. Appareil (1) selon une ou plusieurs des revendications précédentes, **caractérisé en ce que** lesdits moyens de retenue (20) peuvent se déplacer à une vitesse qui est égale à la première vitesse d'avancement (v1) de ladite première courroie transporteuse (3).

6. Appareil (1) selon une ou plusieurs des revendications précédentes, **caractérisé en ce que** lesdits moyens de retenue (20) ont au moins un élément allongé qui se rapproche de ladite première courroie transporteuse (3) le long de ladite direction d'avancement (100) vers ladite seconde courroie transporteuse (4).

7. Appareil (1) selon une ou plusieurs des revendications précédentes, **caractérisé en ce que** lesdits moyens d'allongement longitudinal (30) peuvent se déplacer parallèlement à ladite direction d'avancement (100) à une vitesse qui est égale à ladite seconde vitesse d'avancement (v2) de ladite seconde courroie transporteuse (4).

8. Appareil (1) selon une ou plusieurs des revendications précédentes, **caractérisé en ce qu'**il comprend, en amont desdits moyens d'écartement (40), un dispositif (50) pour découper ladite base (10a) desdits triangles de pâte (10) afin de fournir au moins une incision (10b) qui est perpendiculaire à ladite base (10a) dudit triangle de pâte (10).

9. Appareil (1) selon une ou plusieurs des revendications précédentes, **caractérisé en ce que** lesdits moyens de retenue (20) comprennent au moins une courroie de pression (21).

10. Appareil (1) selon une ou plusieurs des revendications précédentes, **caractérisé en ce que** lesdits moyens d'écartement (40) comprennent au moins un premier et au moins un second rouleau d'écartement (41a, 41b), qui peut se déplacer en mise en prise avec ladite base (10b) dudit triangle de pâte (10) à l'opposé de ladite au moins une incision (10b).

11. Appareil (1) selon une ou plusieurs des revendications précédentes, **caractérisé en ce que** lesdits moyens d'écartement (40) comprennent au moins un premier et au moins un second outil de manipulation d'écartement (42a, 42b) qui peut se déplacer, en mise en prise avec ladite base (10a) dudit triangle de pâte (10), à l'opposé de ladite au moins une incision (10b).
